# EUROPEAN PATENT APPLICATION

(11) **EP 3 292 916 A1**
(43) Date of publication of application: **14.03.2018**
(21) Application number: 16188039.8
(22) Date of filing: 09.09.2016
(51) Int. Cl.: B05C 3/18, B05C 11/04, B29C 47/02

(54) **SHEET CASTING APPARATUS AND METHOD**

(71) Applicant: Sandvik Intellectual Property AB, 811 81 Sandviken (SE)
(72) Inventor: POZZI, Raffaele, IT-20812 LIMBIATE (IT); ZARANTONELLO, Fiorenzo, IT-21019 SOMMA LOMBARDO (VA) (IT)
(74) Representative: Patentanwälte Ruff, Wilhelm, Beier, Dauster & Partner mbB

(57) **Abstract**

Sheet casting apparatus and a method of sheet casting from a liquid or slurry. The casting apparatus comprises a trough to contain a fluid or slurry and a casting knife to guide and control the fluid flow onto a substrate i.e., a belt or drum. At least one first and at least one second adjuster are connected to the knife to adjust selectively a shape profile and a position of at least parts of the knife relative to the substrate.

## Description

### Field of invention

The present invention relates to sheet casting apparatus and a method of sheet casting from a liquid or slurry and in particular, although not exclusively to casting apparatus having an adjustably mounted casting knife.

### Background art

Fluid based casting processes have been used in the manufacture of sheets or films. Typically, a liquid, semi-liquid suspension or slurry is spread via a casting knife onto a travelling belt or rotating drum where it dries to form a sheet of desired thickness. Example materials that have been fluid cast include tobacco, food, wood, chemicals, paper and rubber. Such product sheets are typically required with very thin layer thicknesses and within reasonably tight tolerances. It is therefore necessary to cast such products accurately onto the receiving and drying substrate surface (belt or drum onto which they are fed). Typical casting apparatus comprise what is commonly referred to as a casting box formed from a frame, a fluid reservoir or trough with the frame and/or trough mounting a casting knife that guides delivery of the fluid onto the casting surface. An example fluid casting process and apparatus is described in US 3,213,858 and US 5,724,998.

Existing casting box arrangements are disadvantageous for a number of reasons. With use, the casting surface formed from the travelling belt or rotating drum may become distorted and profiled relative to an ideal completely flat or linear configuration. The casting knife is typically held in a fixed position relative to the casting surface such that product layer thicknesses vary at regions of the sheet outside of the required tolerances. For example, a fluid cast layer having an irregular thickness will dry unevenly which in turn may distort the resulting solid product and/or provide a product that does not satisfy the desired specification. Accordingly, conventional fluid casting arrangements may be considered unreliable to create accurately layers and sheets to specific dimensions and within tight tolerances. Accordingly, what is required is an apparatus and method that addresses these problems.

### Summary of the Invention

It is a first general objective to provide sheet casting apparatus and in particular a mechanism of mounting a casting knife at a fluid reservoir, trough or what is typically referred to as a casting box, to create a knife profile (in a longitudinal direction of the casting knife) to suit/match a shape profile of a casting substrate such as a band, belt or drum onto which the fluid is cast. It is a further specific objective to provide a knife mounting arrangement that allows the profile and/or position of the casting knife to be adjusted dynamically during the casting process so as to ensure a resulting product sheet or layer satisfies a desired specification with regard to product thickness and profile. A further specific objective is to provide a casting box knife holder arrangement that may be attached, assembled and optionally dismantled at existing casting apparatus to provide efficient use of existing technology.

The objectives are achieved by providing a casting knife having a generally elongate strip like configuration that is positionally mounted and supported by at least one first and second adjuster so as to provide selective adjustment of a shape profile and/or a position of at least a part of the knife relative to the casting surface of the substrate and/or at least regions of the casting box, a fluid trough and/or a frame that forms a part of the casting apparatus to support the casting knife and/or the casting box.

According to the subject invention, the at least one first adjuster may be positioned at the elongate casting knife to adjust the knife profile in a longitudinal direction during an initial set-up stage prior to casting. The first adjuster is accordingly advantageous to obtain a knife having a completely flat or linear edge or end face and/or to change the shape profile of the knife to suit the casting requirements and for example to match the shape profile of the substrate (plate, band, belt, drum and the like) onto which the fluid is cast. The present apparatus preferably comprises a plurality of first adjusters mounted at spaced apart regions along the length of the knife blade such that by adjustment, the shape profile of a lower or downward facing edge of the knife blade may be changed at selected discrete (or small regions or portions) along its length so as to be linear, curved, angled or bent in a lengthwise direction so as to comply with or depart from a straight or linear elongate blade. In particular, the first adjuster is advantageous to change the lengthwise profile of the blade such that regions may be convex or concave relative to a generally horizontal plane within which the fluid is cast to form the layer. For example, where a belt or drum of an existing casting apparatus comprises a central region of increased height or diameter (being bowed outwardly) the knife profile may be adjusted to comprise a curvature corresponding to the widthwise curvature of the belt or drum so as to provide a uniform separation distance between the casting surface and the knife guiding edge in the widthwise direction across the belt or drum.

Preferably, the apparatus comprises a plurality of second adjusters mounted at different regions of the knife which are capable of adjusting at least one larger length portion of the knife, relative to the first adjusters, and/or the position of the knife relative to other components of the apparatus such as the substrate, the trough or frame. The second adjusters are advantageous to dynamically adjust the relative position of the knife blade during casting in the event that the cast product has departed from the desired specification (as identified by inspection or via automated detection) with regard to thickness or a general shape profile. It is preferred that any dynamic modification of the position of the blade is provided quickly and accurately. Accordingly, the second adjusters preferably comprise automated drive mechanisms so as to be controlled remotely and according to predefined quantised adjustment intervals.

According to a first aspect of the present invention there is provided sheet casting apparatus to form a sheet from a liquid or a slurry comprising: a frame; a trough mounted at the frame to receive and contain the liquid or slurry for application onto a substrate to form the sheet; a casting knife provided at a region of the trough to guide the liquid or slurry onto the substrate; characterised by: at least one first adjuster and at least one second adjuster each connected respectively to the knife, the first adjuster configured to adjust a shape profile of at least a part of the knife and the second adjuster configured to adjust a position of at least a part of the knife relative to the trough and/or the frame.

Accordingly, the subject invention is advantageous by the first and second adjusters to provide and facilitate an initial configuring or tailoring of the knife blade profile to satisfy and comply with existing casting apparatus substrates i.e. the respective shape profiles of belts or drums. The subject invention is further advantageous to allow in-use adjustment of the knife profile and/or position to ensure continuous manufacture of a product according to a defined specification and within desired tolerances.

Reference within this specification to *'the shape profile'* of at least a part of the knife encompasses the shape and position of a lengthwise extending edge of the knife positionable to be downward facing opposed to the substrate onto which the layer or sheet is cast. This includes adjustment of the profile of the lengthwise extending edge so as to be more or less linear (straight), angled, bent or curved to achieve a desired shape profile of the edge. Reference to *'at least a part of the knife'* include regions of the length of the knife and in particular regions of the edge of the knife in the lengthwise direction.

Preferably, the second adjuster is mounted at the apparatus so as to be configured to adjust a position of at least a part of the knife relative to the substrate onto which the layer or sheet is cast. In particular, the adjustment of a position of at least a part of the knife encompasses specifically the control and/or adjustment of a separation distance (in the vertical or near vertical plane, perpendicular to a plane of the substrate) between the lengthwise extending edge of the knife and the casting surface of the substrate.

Preferably, the first adjuster is a first type of adjuster having a first mechanism and the second adjuster is a second type of adjuster having a second mechanism being different to the first. Additionally, the first and second adjusters differ in the relative position at the apparatus, their action on the knife with regard to adjustment of i) the profile and separately ii) the position of the knife relative to the frame, trough and/or casting surface of the substrate.

Preferably, the first adjuster comprises an actuator having a manual drive component such that a shape profile (and/or relative position) of at least a part of the knife is capable of being adjusted manually. Optionally, the first adjuster comprises a micrometre screw actuator having a linear extender for extension and retraction relative to a drive body, the linear extender connected to a region of the knife. Optionally, the linear extender is capable of quantised extension and retraction relative to the drive body in micrometre intervals of +/- 5, 10, 15, 20, 25 or 30 µm. Optionally, the drive body comprises a mounting collar and a rotatable head, such that rotation of the head relative to the collar provides linear extension and retraction of the linear extender. Such an arrangement is advantageous to provide convenient manual control of the linear extender and hence manual positional adjustment of the knife.

Preferably, the second adjuster comprises an actuator having an automated drive component such that the position (and/or shape profile) at least a part of the knife is capable of being adjusted by the automated drive component. Optionally, the automated drive component comprises a motor. Optionally, the second adjuster comprises a brushless motor connected to a linear extender, the liner extender further connected to a region of the knife. The second adjuster being automated is advantageous to provide dynamic positional adjustment of the knife whilst the casting apparatus is in use. Optionally, the automated drive component is coupled to an electronic control device such as a programmable logic controller (PLC) so as to provide remote control of the knife position in response to a visual or electronically identified deviation of the product layer or sheet from a predetermined configuration such as a defined thickness or a general shape profile. The automated drive component is further advantageous to provide a quick and reliable adjustment of the knife profile being responsive to provide adjustment in less than a 1, 2, 3, 4, or 5 seconds.

Preferably, the knife comprises an elongate strip having a length, a width and a thickness wherein a lengthwise extending edge is positionable to be downward facing to represent a casting edge of the knife. Optionally, the knife may comprise a length in a range 1 to 5 meters, 1 to 4 meters or 1 to 3 meters.

Optionally, the first and second adjusters are respectively mounted at the frame so as to move at least a part of the knife relative to the frame. Optionally, a plurality of first adjusters are each connected to respective regions of the knife and are spaced apart in a lengthwise direction along the knife. Optionally, a plurality of second adjusters are connected to respective regions of the knife and are separated in a lengthwise direction along the knife.

Optionally, the first adjusters are mounted at a common knife holder that is movably mounted at the frame. Optionally, the knife holder comprises a length corresponding approximately to the length of the knife blade. Preferably, the first adjusters are mounted at the knife holder and are spaced apart from one another along the length of the knife holder and/or along the length of the knife.

Preferably, the second adjusters are mounted at the knife holder. Optionally, the second adjusters are configured to move the knife holder relative to the frame. According to some embodiments, the first adjusters are movable with the knife holder via actuation of the second adjusters.

Optionally, the first adjusters are configured to move the knife relative to the knife holder and the second adjusters are configured to move the knife holder relative to the frame.

Such a mechanism is advantageous to provide a compact construction and independent adjustment of the profile of the knife blade relative to the knife holder such that the blade shape profile may be adjusted by the first adjusters at the knife holder independently of the frame that mounts the trough.

Preferably, the apparatus comprises a greater number of first adjusters than second adjusters connected to the knife. Optionally, a ratio of the number first adjusters to second adjusters is in a range from 2:1 and up to 5:1. Optionally, the ratio of first adjusters to second adjusters is 2:1, 3:1, 4:1 or 5:1. Accordingly, the first adjusters are capable of providing *'fine'* adjustment of the shape profile of the knife blade (at discrete regions along the blade length) whilst the second adjusters are configured to provide *'general'* adjustment of the position of the entire knife blade (i.e., substantially the full length of the blade as a single movable object) relative to the frame, trough and/or substrate onto which the sheet or layer is cast.

Optionally, the apparatus comprises between two to fifteen first adjusters and between one to twelve second adjusters. Optionally, the apparatus comprises eight to twelve first adjusters and two to four second adjusters. Optionally, the apparatus comprises ten first adjusters and three second adjusters.

According to a second aspect of the present invention there is provided a method of controlling a profile and/or a position of at least part of a casting knife of sheet casting apparatus usable to form a sheet from a liquid or slurry, the method comprising: providing a frame to mount a trough to receive and contain a liquid or slurry for application onto a substrate to form the sheet; supporting and positioning a casting knife at a region of the trough, the knife configured to guide the liquid or slurry onto the substrate; characterised in that: the casting knife is supported at the region of the trough by at least one first and at least one second adjuster each connected to the knife, the first adjuster configured to adjust a shape profile of at least a part of the knife and the second adjuster configured to adjust a position of at least a part of the knife relative to the trough and/or the frame.

Optionally, the substrate comprises a movable belt, strip, band, plate or a rotating drum. Optionally, the casting apparatus is stationary relative to the moving substrate. According to further specific implementations, the casting apparatus may be movable in a general plane of the substrate so as to deposit the liquid or slurry onto the substrate surface via a travelling mount mechanism.

### Brief description of drawings

A specific implementation of the present invention will now be described, by way of example only, and with reference to the accompanying drawings in which:
Figure 1 is a front view of sheet casting apparatus comprising a elongate knife mounted at a casting box frame via a plurality of first and second adjusters according to a specific implementation of the present invention;
Figure 2 is a plan view of the casting knife holder arrangement of figure 1;
Figure 3 is an end view of the casting arrangement of figure 1 showing a first adjuster mounting the knife at a support frame according to the specific implementation of the present invention.
Figure 4 is an end view of the casting arrangement of figure 1 showing a second adjuster mounting the knife at a support frame according to the specific implementation of the present invention.
Figure 5 is a partial cross sectional schematic view of the second adjuster configured to move the knife according to the specific implementation of the present invention.

### Detailed description of preferred embodiment of the invention

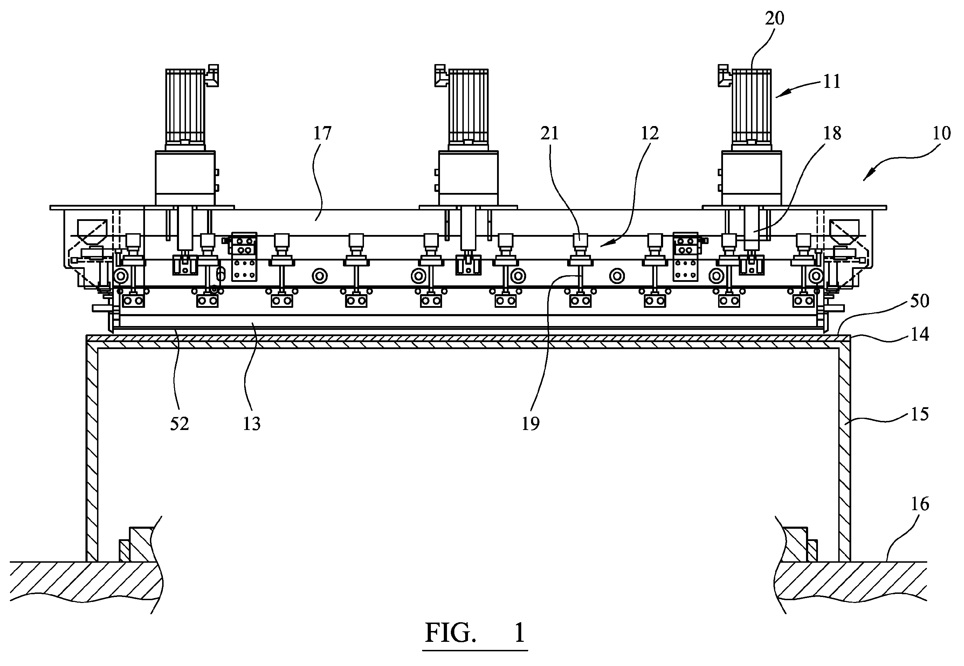

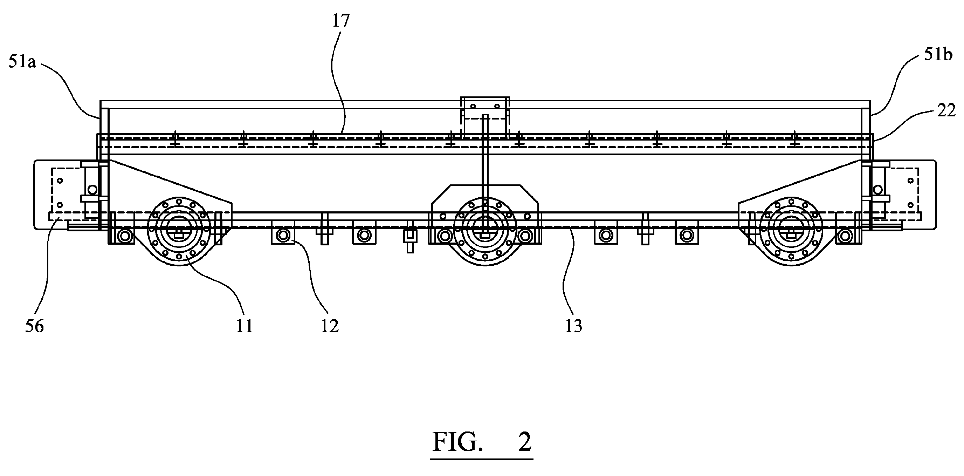

Referring to figures 1 and 2, a screen casting apparatus 10 comprises a main frame 17 having a generally elongate configuration to extend widthwise across a moving belt 14 that extends around a rotatable drum 15 having a central drive axel 16. Belt 14 comprises a generally planar surface 50 onto which a liquid or slurry (not shown) is cast via the apparatus 10. Frame 17 comprises a first lengthwise end 51a and a second lengthwise end 51b. A cutter knife indicated generally by reference 13 is formed as an elongate strip or blade having a length corresponding approximately to the length of frame 17 so as to extend between lengthwise ends 51a, 51b. Knife 13 comprises a lengthwise extending edge 52 orientated to be downward facing opposed to belt surface 50. A small vertical gap is provided between knife edge 52 and surface 50 such that the liquid or slurry (retained within a reservoir region at frame 17) is capable of flowing into the region under knife edge 52 and onto surface 50 where it is deposited as a layer of predetermined thickness according to the general casting process.

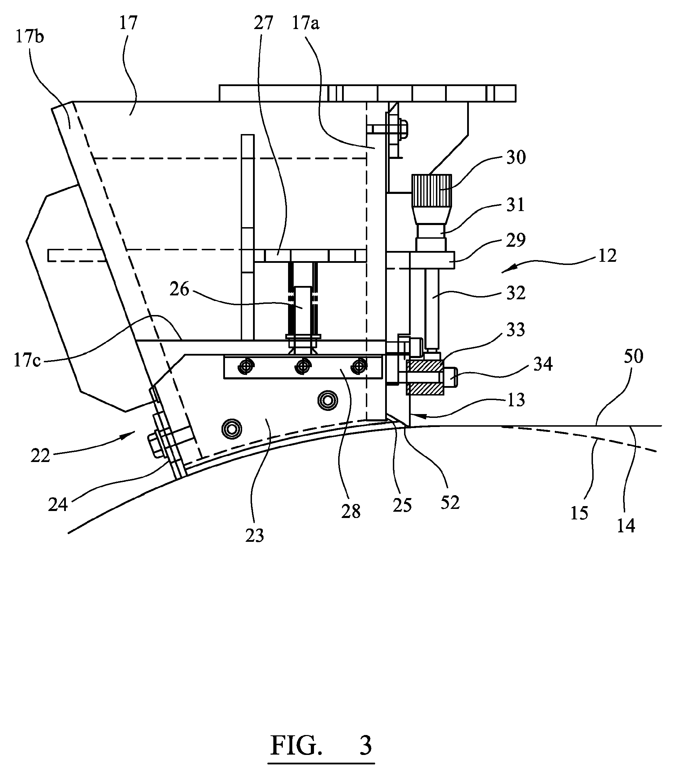

Knife 13 is suspended or mounted at frame 17 via a plurality of primary or first adjusters 12 and a plurality of secondary or second adjusters 11. Both of the first and second adjusters 12, 11 comprise generally an actuator component that is movably mounted relative to frame 17 and a corresponding drive component to displace the actuator. Each actuator is connected to knife 13 so as to selectively adjust the position of regions of knife 13 relative to frame 17 and belt 14 (and in particular casting surface 50 as will be described in further detail referring to figures 3 to 5). In particular, each first adjuster 12 comprises a first drive component 21 which according to the specific implementation is a rotatably mounted head (i.e., a rotatable knob) coupled to an elongate rod 19 such that via actuation of the drive component 21, rod 19 is linearly extendable and retractable (relative to the drive component 21). Each rod 19 is connected to blade 13 at a specific region. Similarly, each second adjuster 11 comprises a second drive component 20 in the form of a brushless motor coupled to a linear actuator in the form of an elongate rod 18. Rod 18 is connected indirectly to blade 13 such that actuation of drive component 20 provides for the linear extension a retraction of actuator rod 18 and a corresponding adjustment of the position of blade 13 relative to frame 17 and belt 14 (and in particular casting surface 50).

Referring to figure 3, elongate frame 17 comprises generally a lengthwise extending forward region 17a, a lengthwise extending rearward region 17b and lengthwise extending lower region 17c positioned opposed to casting surface 50. A trough indicated generally by reference 22 is also elongate and extends between the frame lengthwise ends 51a, 51b. Trough 22 comprises a pair of end plates 23 and a rear plate 24 (extending between end plates 23) so as to define three walls of trough 22. A corresponding front wall is defined by blade 13. Accordingly, a liquid or slurry (not shown) may be delivered via a conduit tube (not shown) to trough 22 and is retained at frame 17 by the respective trough walls (plates 23, 24 and blade 13). A suitable floor plate or skirt (not shown) may be provided at a lower region of trough 22 so as to retain or support the containment of the liquid or slurry within trough 22 for delivery onto casting surface 50.

According to the specific implementation, trough 22 is suspended at frame 17 via a plurality of spring mounts indicated generally by reference 26. Each spring 26 extends between a trough mount 28 (provided at trough 22) and a frame part 27 (forming a part of frame 17). Accordingly, trough 22 is spring biased at frame 17 so as to be urged in a general downward direction towards drum 15, belt 14 and in particular casting surface 50. As will be appreciated, spring 26 may comprise manual or automatic adjustment components (not shown) to allow selective adjustment of the position of trough 22 at frame 17 as desired. Trough 22 comprises a lengthwise extending front region 25 to which blade 13 is mounted such that the liquid or slurry is capable of flowing under gravity from the front region 25 and under the lengthwise extending elongate blade edge 52 onto belt 14 as the belt 14 is movably driven under the casting apparatus 10 by rotation of drum 15.

Blade 13 is adjustably mounted at frame 17 via ten first adjusters 12 each connected at different lengthwise regions of blade 13 and spaced apart in a lengthwise direction along frame 17 between frame ends 51a, 51b. According to the specific implementation, first drive component 21 comprises a head 30 (or turn-knob) rotatably mounted at a collar 31 that is in turn mounted to a knife holder indicated generally by reference 29. An elongate rod 32 is linearly extendable and retractable relative to collar 31 and knife holder 29 via rotation of the head 30 about its central axis. A mounting boss 33 is connected at the distal end of rod 32 and is coupled to knife 13 via an attachment bolt 34. Accordingly, by rotation of one or a plurality of the first adjuster heads 30, selected lengthwise regions of knife 13 are capable of being forced to move in a generally vertical plane (upward or downward) relative to frame 17 and belt 14. In particular, rotation of head 30 provides a corresponding adjustment of the shape profile of the knife edge 52 and additionally a size of a gap region defined between the blade edge 52 and the casting surface 50. Where knife 13 is formed from a ductile material such as mild steel or the like, the blade 13 is capable of being bent or distorted via linear extension and retraction of rod 32. Accordingly, the general elongate shape profile of blade 13 along its length may be adjusted via rotation of a head 30 of selected first adjusters 12. For example, should casting apparatus 10 be installed for use with a drum 15 that is generally curved (or bowed) in its widthwise direction, the first adjusters 12 (including in particular those first adjusters 12 towards the frame ends 51a, 51b) may be actuated to introduce a corresponding curvature to blade 13 so as to match or conform to the curvature of drum 15. Accordingly, a generally uniform thickness of cast sheet is obtainable. In particular, the subject invention is advantageous to avoid the creation of layers or sheets having an undesirable non-uniform thickness profile.

Advantageously, the elongate shape profile of blade 13 may be adjusted manually via first adjusters 12 with the casting apparatus 10 mounted in position and above drum 15 and belt 14. Alternatively or in addition, the shape of blade 13 may be adjusted prior to mounting the apparatus 10 in position as shown in figure 1. The first adjusters 12, may be actuated so as to ensure blade 13 comprises an elongate edge 52 that is straight or linear so as to eliminate or reduce any height deviations of edge 52 relative to casting surface 50 where the casting surface is generally straight or linear.

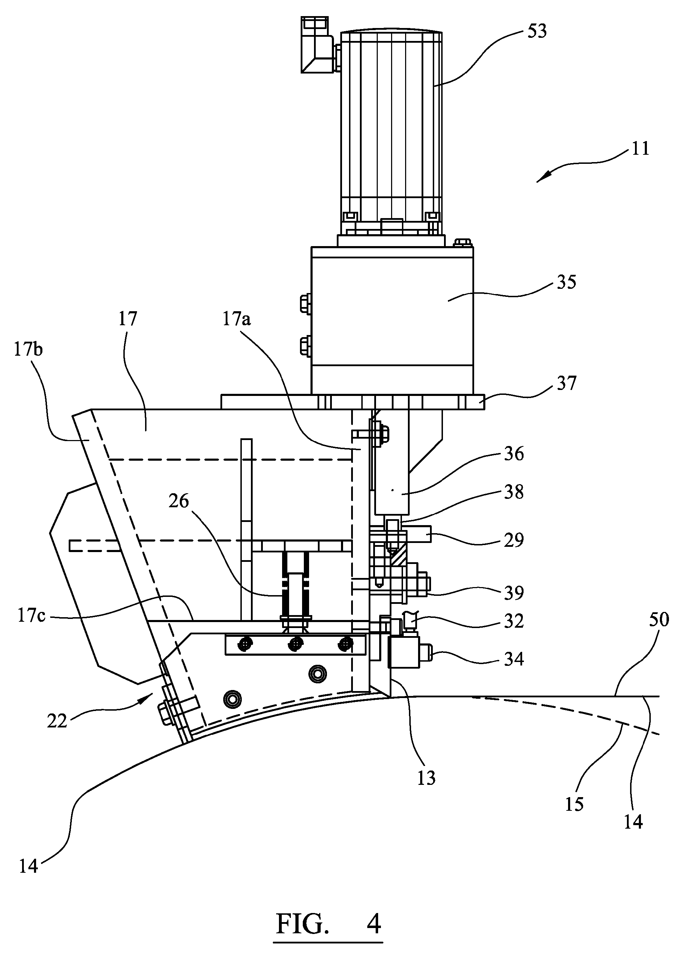

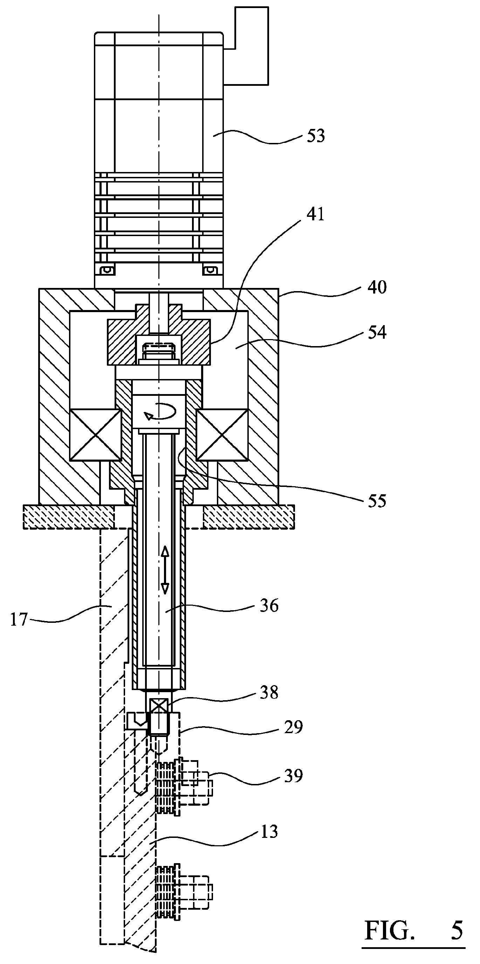

Referring to figures 4 and 5, casting apparatus 10 comprises three second adjusters 11 mounted in spaced apart relationship along the length of frame 17 between frame ends 51a, 51b. Each second drive component 20 comprises a brushless motor 53 mounted at housing 35 that is in turn mounted at frame 17 via an intermediate plate 37. Referring to figure 5, housing 40 comprises an internal chamber 54 that mounts a rotatable sub 41 rotatably driven by motor 53. Sub 41 comprises a corresponding internal bore 55 into which is received one end of an elongate rod 36. As sub 41 is rotated by motor 53, rod 36 is linearly extendable and retractable relative to housing 40 via cooperating threads (not shown) provided between rod 36 and sub 41. A distal end 38 of rod 36 is attached to the knife holder 29 via a mounting bolt 39. Accordingly, linear extension and retraction of rod 36 provides a corresponding raising and lowering of knife 13 (at specific lengthwise regions of knife 13) relative to belt 14 via adjustment of the position of the knife holder 29 (in the vertical plane), perpendicular to the plane of casting surface 50). That is, knife holder 29 and each of the first adjusters 12 is displaceable in the vertical plane (perpendicular to casting surface 50). Accordingly, the size of the gap region (defined between knife edge 52 and casting surface 50) is adjustable via actuation of motor 53 and rod 36. In particular, knife holder 29 is mounted primarily at frame 17 via each of the second adjuster rods 36.

According to the specific implementation, the rods 32, 36 of each respective first and second adjusters 12, 11, comprises quantised adjustment of the order of 20 µm intervals. Such a configuration is advantageous to provide an elongate blade 13 having a casting edge 52 provided with a shape profile to correspond to the shape profile of drum 15, belt 14 and in particular casting surface 50.

In use, a shape profile of knife 13 (and in particular knife edge 52) is initially configured/adjusted via manual adjustment of each rotatable head 30. That is, one or a plurality of the first adjusters 12 are actuated to bend or distort knife 13 along its length at specific lengthwise regions so as to correspond to the profile of casting surface 50 being either generally linear or to comprise one or a plurality of curved regions. With casting apparatus 10 mounted in position at a suitable support frame via mount supports 56 provided at frame ends 51a, 51b (referring to figure 2) a liquid or slurry is introduced into trough 22 via a supply conduit (not shown) extending through frame 17. Drum 15 is rotated to advance belt 14 relative to apparatus 10. Accordingly, the liquid is capable of flowing from trough 22 and onto casting surface 50 as it is rotated over drum 15 so as to deposit a thin layer or sheet of cast product. The relative thickness of the product is determined by the gap region between blade edge 52 and casting surface 50. The casting apparatus may comprise suitable sensors positioned at frame 17 so as to monitor a relative thickness of the sheet cast onto surface 50. Any undesirable variation of thickness may be detected by such sensors (or through the visual inspection). Accordingly, one or more of the second adjusters 11 may be actuated to adjust the gap region at regions along the length of blade 13 (between ends 51a, 51b) so as to adjust and maintain a layer thickness dynamically as the layer is cast onto surface 50. Accordingly, the subject invention is advantageous to avoid waste product by continually adjusting (as needed) the spatial separation of blade 13 from casting surface 50. Each second adjuster 11 may be coupled to a suitable programmable logic controller (PCL) (via wired or wireless communication means) or the apparatus 10 may comprise other electronic control device so as to automatically adjust the separation of blade 13 from casting surface 50 in response to manual or automated detection of the sheet thickness or other characteristic of the drying or dried sheet product. The subject invention is further advantageous to allow an initial configuration of the casting apparatus 10 to provide compatibility with existing drum and belt arrangements that may be either linear or curved in a lengthwise direction of apparatus 10 (between frame ends 51a, 51b). This initial '*set*-*up*' of the apparatus 10 and in particular blade 13 similarly avoids waste product and also a need to replace or reconfigure drum 15 and belt 14 so as to be compatible with the casting apparatus 10. The present apparatus 10 is compatible for use with all manner of drum, belt, plate or conveyor based casting apparatus in which a liquid or slurry melt may be cast onto a moving surface.

## Claims

1. Sheet casting apparatus (10) to form a sheet from a liquid or a slurry comprising:
a frame (17);
a trough (22) mounted at the frame (17) to receive and contain the liquid or slurry for application onto a substrate (14) to form the sheet;
a casting knife (13) provided at a region of the trough (22) to guide the liquid or slurry onto the substrate (14);
**characterised by**:
at least one first adjuster (12) and at least one second adjuster (11) each connected respectively to the knife (13), the first adjuster (12) configured to adjust a shape profile of at least a part of the knife (13) and the second adjuster (11) configured to adjust a position of at least a part of the knife (13) relative to the trough (22) and/or the frame (17).

2. The apparatus as claimed in claim 1 wherein the first adjuster (12) comprises an actuator having a manual drive component such that a shape profile of at least a part of the knife (13) is capable of being adjusted manually.

3. The apparatus as claimed in claims 1 and 2 wherein the second adjuster (11) comprises an actuator having an automated drive component such that the position of at least a part of the knife (13) is capable of being adjusted by the automated drive component.

4. The apparatus as claimed in claim 3 wherein the automated drive component comprises a motor (53).

5. The apparatus as claimed in any preceding claim wherein the first adjuster (12) comprises a micrometre screw actuator having a linear extender (32) for extension and retraction relative to a drive body (30), the linear extender (32) connected to a region of the knife (13).

6. The apparatus as claimed in any preceding claim wherein the second adjuster (11) comprises a brushless motor (53) connected to a linear extender (36), the linear extender (36) further connected to a region of the knife (13).

7. The apparatus as claimed in any preceding claim wherein the knife (13) comprises an elongate strip having a length, a width and a thickness wherein a lengthwise extending edge (52) is positionable to be downward facing to represent a casting edge of the knife (13).

8. The apparatus as claimed in any preceding claim wherein the first and second adjusters (12, 11) are respectively mounted at the frame (17) so as to move at least a part of the knife (13) relative to the frame (17).

9. The apparatus as claimed in any preceding claim comprising a plurality of first adjusters (12) each connected to respective regions of the knife (13) and spaced apart in a lengthwise direction along the knife (13).

10. The apparatus as claimed in any preceding claim comprising a plurality of second adjusters (11) connected to respective regions of the knife (13) and separated in a lengthwise direction along the knife (13).

11. The apparatus as claimed in any preceding claim wherein the trough (22) is mounted at the frame (17), at least in part, via at least one bias component (26) to bias the trough (22) downwardly away from the frame (17).

12. The apparatus as claimed in any preceding claim comprising a greater number of first adjusters (12) than second adjusters (11) connected to the knife (13).

13. The apparatus as claimed in claim 12 wherein a ratio of the number first adjusters (12) to second adjusters (11) is in a range from 2:1 up to 5:1.

14. The apparatus as claimed in claim 13 comprising between two to fifteen first adjusters (12) and between one to twelve second adjusters (11).

15. A method of controlling a profile and/or a position of at least part of a casting knife (13) of sheet casting apparatus (10) usable to form a sheet from a liquid or slurry, the method comprising:
providing a frame (17) to mount a trough (22) to receive and contain a liquid or slurry for application onto a substrate (14) to form the sheet;
supporting and positioning a casting knife (13) at a region of the trough (22), the knife (13) configured to guide the liquid or slurry onto the substrate (14);
**characterised in that**:
the casting knife (13) is supported at the region of the trough (22) by at least one first and at least one second adjuster (12, 11) each connected to the knife (13), the first adjuster (12) configured to adjust a shape profile of at least a part of the knife (13) and the second adjuster (11) configured to adjust a position of at least a part of the knife (13) relative to the trough (22) and/or the frame (17).
